# EUROPÄISCHE PATENTSCHRIFT

(11) **EP 2 578 846 B1**
(45) Veröffentlichungstag und Bekanntmachung des Hinweises auf die Patenterteilung: **06.05.2015**
(21) Anmeldenummer: 12186981.2
(22) Anmeldetag: 02.10.2012
(51) Int. Cl.: F02D 9/10, F02B 31/08, F02F 1/42, F02M 35/108

(54) **Motorzylinder**
Motor cylinder
Cylindre moteur

(30) Priorität: 05.10.2011 AT 14442011
(43) Veröffentlichungstag der Anmeldung: 10.04.2013
(73) Patentinhaber: Mahle König Kommanditgesellschaft GmbH & Co, 6830 Rankweil (AT)
(72) Erfinder: Laimboeck, Franz J., 8051 Thal bei Graz (AT)
(74) Vertreter: Wildhack & Jellinek

(56) Entgegenhaltungen:
- EP-A1- 0 921 289
- WO-A1-2009/149724
- DE-A1- 4 017 066
- DE-A1- 10 323 978
- JP-A- 58 048 712

## Beschreibung

Die Erfindung betrifft einen Motorzylinder gemäß dem Oberbegriff des Patentanspruches 1.

Aus der AT 005488 U1 ist eine Einlasskanalanordnung bekannt, bei der der Einlasskanal, nicht aber die den Einlasskanal zu zwei Einlassventilen führenden bzw. fortsetzenden Kanäle von einer Drosselklappe verschließbar sind.

Es sind ferner Motorzylinder bekannt, bei denen die Durchströmung des Füllkanals und des Ladungsbewegungskanals mittels eines Schiebers geregelt ist. Dieser Schieber besitzt jedoch aufgrund der in diesen Kanälen herrschenden Drücke Nachteile und kann die Durchströmung nicht effizient regeln.

Ziel der Erfindung ist die Erstellung eines einfach aufgebauten und im Betrieb gut regelbaren Motorzylinders bzw. einer Einlasskanalanordnung eines Motorzylinders, bei der gesteuert die richtigen Ladungsbewegungen für den jeweiligen Betriebszustand erstellt werden.

Erfindungsgemäß ist ein Motorzylinder der eingangs genannten Art mit den im Kennzeichen des Patentanspruches 1 angeführten Merkmalen charakterisiert.

Erfindungsgemäß ist vorgesehen, dass die Durchströmung der beiden Kanäle von einer gemeinsamen, sich in die oder über die beiden Kanäle bzw. deren Einströmöffnungen erstreckenden Drosselklappe geregelt ist, mit der die brennraumfernen Endbereiche der beiden Kanäle bzw. deren Einströmöffnungen verschließbar sind.

Erfindungsgemäß ist es vorgesehen, wenn im Zylinderkopf eine Einspritzeinheit angeordnet ist, deren Sprührichtung durch das den Ladungsbewegungskanal verschließende Ventil in den Verbrennungsraum des Motorzylinders gerichtet verläuft, wobei die Sprührichtung dieser Einspritzeinheit durch den zwischen dem Ventilsitz und dem Ventilteller ausgebildeten Ventilspalt verläuft. Damit erfolgt ein Einspritzen von Kraftstoff in das zugeführte Frischgas mit einer entsprechenden Verwirbelung, sodass sich durch die vorhandenen Turbulenzen eine optimale Gemischbildung und Homogenisierung des eingespritzten Kraftstoffes mit dem zugeführten Frischgas ergibt.

Für eine Optimierung der Verbrennung ist des weiteren vorgesehen, dass in den Ladungsbewegungskanal im Bereich zwischen der Drosselklappe und dem Einlassventil ein zur Achse des Ventils windschief verlaufendes(r) und auf den Ventilspalt des offenen Ventils ausgerichtetes(r) Leerlaufrohr oder Leerlaufluftkanal einragt oder einmündet, das oder der vorzugsweise eine zur Zylinderbohrung tangentiale Einströmrichtung besitzt und vorteilhafterweise auf den dem Ventilsitz dieses Ventils nahe liegenden Wandbereich der Zylinderbohrung gerichtet ist.

Das Mischungs- und Verbrennungsverhalten verbessert dadurch, dass die in den Ladungsbewegungskanal mündende Einspritzeinheit eine Fächerdüse aufweist, mit der Kraftstoff fächerförmig durch den Ventilspalt des den Ladungsbewegungskanal abschließenden Ventils in den Zylinder in einen Bereich einspritzt, der unterhalb der im Zylinderkopf im Mittelbereich der Zylinderbohrung angeordneten Zündeinheit liegt und/oder die Einstrahlebene der fächerförmigen Kraftstoffstrahlen von dem Strahl der durch den Leerlaufluftkanal eingeströmten Verbrennungsluft geschnitten wird.

Mit einer derartigen Ausbildung des Motorzylinders ist die Durchströmung des Füllkanals und des Ladungsbewegungskanals, insbesondere in Abhängigkeit voneinander, regelbar und die an der Drosselklappe auftretenden Drücke sind beherrschbar. Ferner wird die Verbrennung begünstigt.

Ein einfacher Aufbau der Drosselklappe ergibt sich, wenn die Drosselklappe ein plattenförmiger Bauteil ist, der in seinem mittleren Bereich um eine zwischen den beiden Kanälen verlaufende und senkrecht zur Durchströmungsrichtung stehende Schwenkachse verschwenkbar gelagert ist und/oder wenn die Drosselklappe zwei Abschnitte aufweist, die jeweils in einem der beiden Kanäle liegen und um ihre Schwenkachse von einer quer zur Durchströmungsrichtung verlaufenden Verschlussstellung in eine parallel zur Durchströmungsrichtung verlaufende Offenstellung verschwenkbar sind. Es ist für die Regelung von Vorteil, wenn die beiden benachbart der Schwenkachse liegenden bzw. an die beiden Seiten des mittleren Bereiches anschließenden Abschnitte der Drosselklappe in der selben Ebene liegen und jeweils in einen der beiden Kanäle ragen und in beiden Kanälen Schwenkbewegungen in die gleiche Drehrichtung vollführen.

Von besonderer Bedeutung ist es, wenn vorgesehen ist, dass die Innenwandfläche des Ausgangs- bzw. Einströmkanals in ihrem - in Durchströmungsrichtung gesehen - unmittelbar vor der Drosselklappe liegenden Bereich eine torusförmige Ausbildung besitzt, die an den vom Umfang des in den Füllkanal ragenden Abschnittes der Drosselklappe bei seiner Schwenkbewegung überstrichenen Raumbereich angepasst ist, wobei sich der Torus über einen Schwenkwinkel A der Drosselklappe erstreckt, wobei 0 < A ≤ 40°, vorzugsweise 0 < A ≤ 35°, ist, und ein Winkel A von 0° der Verschlussstellung der Drosselklappe entspricht. Dieser torusförmige Bereich erstreckt sich strömungsaufwärts bzw. außerhalb des Füllkanals etwa über den halben Umfang des Einlasskanals.

Mit dem Torus wird erreicht, dass der eine der beiden den Ausgangskanal fortsetzenden Kanäle, nämlich der Füllkanal, bei einer Verschwenkung der Drosselklappe ausgehend von ihrer Verschlussstellung in ihre Offenstellung über einen vorgegebenen Schwenkwinkel der Drosselklappe noch verschlossen verbleibt, wogegen der Ladungsbewegungskanal bereits sukzessive geöffnet wird. Mit dieser Ausbildung wird erreicht, dass eine verlangsamte Verbrennung bei Teillast durch eine Verbrennung mit höheren Strömungsgeschwindigkeiten und dadurch entstehender höherer Ladungsbewegung und Turbulenz beschleunigt wird. Bei hohen Lasten kann die dissipierende Strömungsgeschwindigkeit und daraus entstehende Turbulenz im Zylinder zurückgenommen werden, insbesondere durch vermehrtes Einströmen von Frischgas über den Füllkanal, sodass die im Brennraum auftretende Ladungsbewegung, die durch das Einströmen von Frischgas durch den Ladungsbewegungskanal entsteht, reduziert wird. Dazu wird die vorgesehene Drosselklappe möglichst bzw. relativ nahe der den Füllkanal und den Ladungsbewegungskanal abschließenden Einströmventile angeordnet. Der Abstand der Drosselklappe von den Ventilen beträgt nicht mehr als das zwei- bis dreifache der längstens Erstreckung bzw. Abmessung bzw. der längeren Achse der Drosselklappe.

Wichtig für die Ausbildung einer die Teillastverbrennung begünstigenden Ladungsbewegung innerhalb des Verbrennungsraumes ist es, dass der Füllkanal verschlossen bleibt, solange bis der Ladungsbewegungskanal einen gewissen Mindestöffnungsquerschnitt erreicht hat. Dies wird durch den vorgesehenen Schwenkwinkel erreicht, über den die Drosselklappe an der Innenwandfläche des Füllkanals noch dicht anliegt bzw. dem Torus möglichst nahe kommt und eine Durchströmung des Füllkanals so weit wie möglich verhindert. Nachdem die Drosselklappe den durch die torusförmige Ausbildung der Innenwandfläche maximalen Schwenkwinkel A überschritten hat, wird über beide Kanäle Frischgas in den Verbrennungsraum eingeströmt.

Ein einfacher Aufbau und ein gutes Regelverhalten ergeben sich, wenn der Bereich der die torusförmige Ausbildung besitzenden Innenwandfläche und die Drosselklappe bezüglich einer senkrecht zur Schwenkachse der Drosselklappe stehenden Ebene und/oder die Drosselklappe zu einer die Schwenkachse enthaltenden Ebene symmetrisch ausgebildet sind und/oder wenn die torusförmige Innenwandfläche des Ausgangskanals und die Umfangsfläche des an die Innenwandfläche angepassten Abschnittes der Drosselklappe über den Bereich des Schwenkwinkels zueinander dicht geführt sind und/oder wenn der Wandbereich mit der torusförmigen Innenwandfläche eine Ausbuchtung der Wand des Ausgangkanals darstellt.

Für das Regelverhalten bzw. für die Ausbildung des Torus bzw. ist es von Vorteil, wenn die der Schwenkachse entfernt liegenden Umfangsbereiche der die Kanäle verschließenden bzw. an den rechteckigen Mittenbereich der Drosselklappe anschließenden, Abschnitte der Drosselklappe gerundet, insbesondere elliptisch oder kreisförmig gerundet bzw. halbkreisförmig, halbelliptisch oder halboval ausgebildet sind.

Um eine entsprechende Abdichtung der Durchströmquerschnitte des Füllkanals und des Ladungsbewegungskanals zu erreichen ist vorgesehen, dass die Drosselklappe in ihrer Verschlussstellung über ihren gesamten Umfang bzw. zumindest den gesamten Umfang der Abschnitte an die von dem Ladungsbewegungskanal und dem Füllkanal gebildeten Wandflächen anliegt bzw. diesen möglichst nahe kommt.

Für die Zündung des Kraftstoff-Luft-Gemisches ist es zweckmäßig, wenn im Zylinderkopf zumindest eine in den Verbrennungsraum ragende Zündeinheit angeordnet ist.

Erfindungsgemäß ist vorgesehen, dass sich die zwischen den nebeneinander liegenden Kanälen ausgebildete Trennwand von dem zwischen benachbarten Ventilen bzw. Ventilsitzen liegenden, zylindernahen Bereich der Kanäle bis zur Bohrung oder Lagerung der Schwenkachse der Drosselklappe erstreckt.

Damit erfolgt eine Trennung des Füllkanals und des Ladungsbewegungskanals im Bereich zwischen den Ventilen und der Drosselklappe. In den beiden Kanälen kann voneinander getrennt eine Luftregelung erfolgen, ohne dass sich eine eine mit der Drosselklappe und/oder dem Leerlaufrohr und/oder der Einspritzeinheit erfolgende Regelung in einem Kanal direkt auf die Regelung in dem anderen Kanal auswirkt. Dazu ist es vor allem zweckmäßig, wenn die Trennwand in ihrem zylinderfernen Endbereich mit der Schwenkachse dicht abschließt oder an dieser dicht anliegt oder dass die Schwenkachse in dem Endbereich die Schwenkachse gelagert ist.

Für den konstruktiven Aufbau und die Strömungsverhältnisse des Füllkanals und des Ladungsbewegungskanals ist es von Vorteil, wenn die Drosselklappe von einer ovalen Platte gebildet ist oder wenn die Drosselklappe von einer Platte gebildet ist, die einen rechteckigen oder quadratischen Mittelbereich umfasst, an den an gegenüberliegenden Seiten jeweils ein von einem Halbkreis oder von einer Halbellipse oder von einem Halboval gebildeter Abschnitt anschließt.

Insbesondere bei einer derartigen Ausbildung kann zur Erzielung optimaler Störungsverhältnisse vorteilhafterweise vorgesehen sein, dass die Innenwandflächen der Kanäle und/oder die im Bereich der Drosselklappe liegende Innenwand des Ansaugkanals, ausgenommen die Ausbildung jeweils für sich und/oder untereinander parallele Erzeugende aufweisen.

Für die Ausbildung der Drosselklappe ist es von Vorteil, wenn die Schwenkachse längs der kürzeren Mittelachse der Drosselklappe verläuft und/oder senkrecht zu den freien Seiten des Mittelbereichs verläuft und/oder parallel zur Ebene der Trennwand und senkrecht zu deren Längserstreckung in ihrem schwenkachsennahen Bereich ausgerichtet ist.

Konstruktiv und für das Regelverhalten von Vorteil ist es, wenn die Drosselklappe in ihrer Verschluss- und/oder Leerlaufstellung oder in Stellung bei niedrigster Teillast die beiden Kanäle dicht abschließt und/oder in den drosseinahen Anfangsbereichen der beiden Kanäle längs des Umfanges des Einlasskanals verlaufende Anlagestufen für Umfangsbereiche, vorzugsweise für den gesamten Umfangsbereich, der Drosselklappe ausgebildet sind.

Ein günstiger Regelbereich für die zugeführte Verbrennungsluft bzw. zur Ausbildung eines Kraftstoff-Verbrennungsluft-Gemisches wird erreicht, wenn die torusförmige Ausbildung der Innenwandfläche über einen Winkelbereich von maximal 40°, vorzugsweise maximal 35°, ausgehend von der durch die Verschlussstellung der Drosselklappe definierten Ebene, verläuft, wobei der Scheitel des Winkels in der Schwenkachse liegt.

Die Größe der Drosselklappe und damit des Füllkanals und des Ladungsbewegungskanals bzw. des Einströmungskanals wird derart bemessen, dass die Längsachse der Drosselklappe der maximalen, gegebenenfalls um maximal 10% vergrößerten, Gesamterstreckung der Ventilöffnungen der Ventile der Kanäle und die Querachse der Drosselklappe dem, gegebenenfalls um maximal 10% vergrößerten, Innendurchmesser eines Ventilsitzringes entspricht.

Es zeigte sich, dass es das Mischungs- und Verbrennungsverhalten verbessert, wenn die Einmündung des Leerlaufluftkanals in den Ladungsbewegungskanal zwischen der Drosselklappe und dem Ventilsitzring in einem Bereich von 0 bis 35 %, vorzugsweise 0 bis 30 %, dieses Abstands oberhalb des Ventilsitzrings ausgebildet ist und zylinderseitig vorzugsweise bis zum Ventilsitzring geführt ist oder diesen berührt.

Die Verbrennung bzw. die Gemischbildung werden auch begünstigt, wenn die Einspritzeinheit im Ladungsbewegungskanal zwischen der geschlossenen Drosselklappe und dem Ventilsitzring in einem Bereich von 5 bis 30 %, vorzugsweise 10 bis 20 %, dieses Abstands oberhalb des Ventilsitzrings angeordnet ist oder einmündet.

Wie bereits angesprochen ist es somit für die Gemischbildung und Verbrennung zweckmäßig, wenn dem Leerlaufluftkanal ein Leerlaufluftregler vorgeschaltet ist und für jeden Zylinder nur ein Leerlaufluftkanal vorgesehen bzw. ausgebildet ist und/oder in den Ansaugkanal eine zylinderferne Kraftstoffeinspritzeinheit einmündet, mit der gesteuert Kraftstoff in die drosselnahen Anfangsbereiche des Füllkanals und/oder Ladungsbewegungskanals einspritzbar ist.

Von Vorteil ist es für die Gemischbildung, wenn der Leerlaufluftregler bei einer im Winkel von 30 bis 90° geöffneten Drosselklappe den Durchfluss durch die Mündung des Leerlaufluftkanals auf einen vorgegebenen, minimalen, von Null unterschiedlichen Durchflusswert einstellt.

Die Erfindung betrifft des weiteren auch einen fremdgezündeten Verbrennungsmotor mit zumindest einem erfindungsgemäß ausgebildeten Motorzylinder.

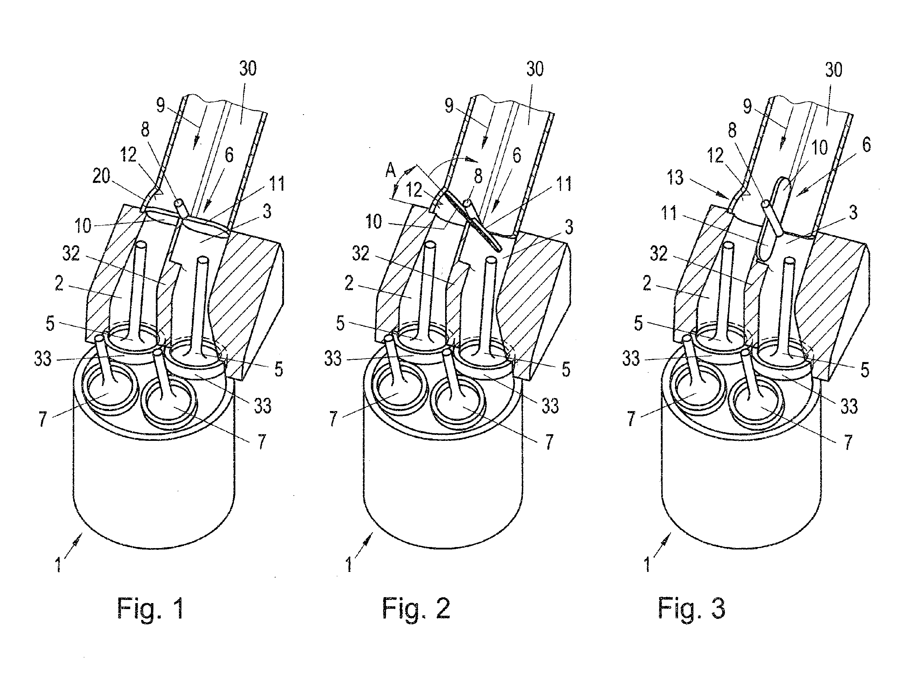

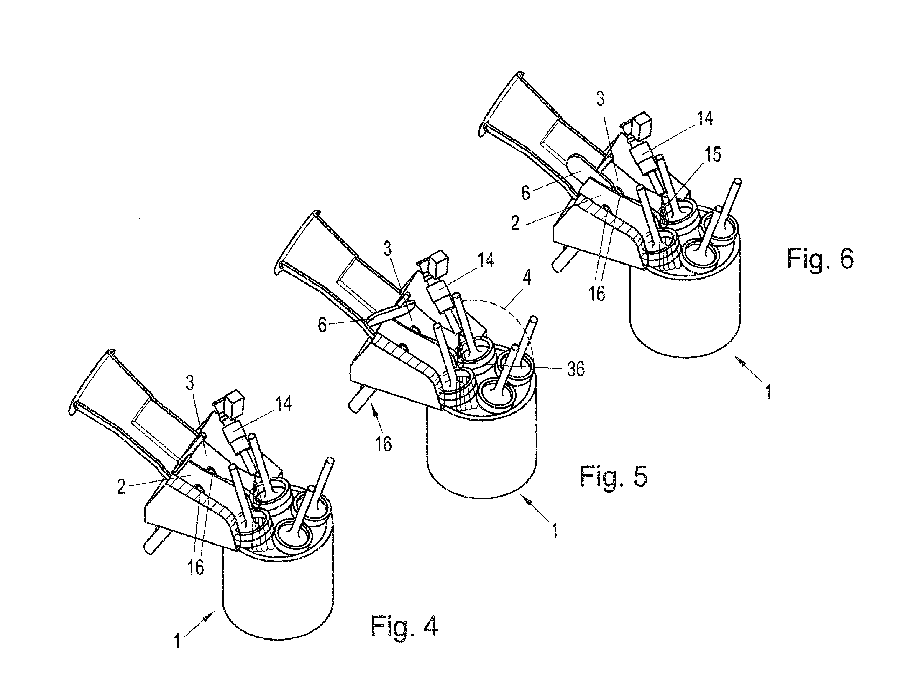

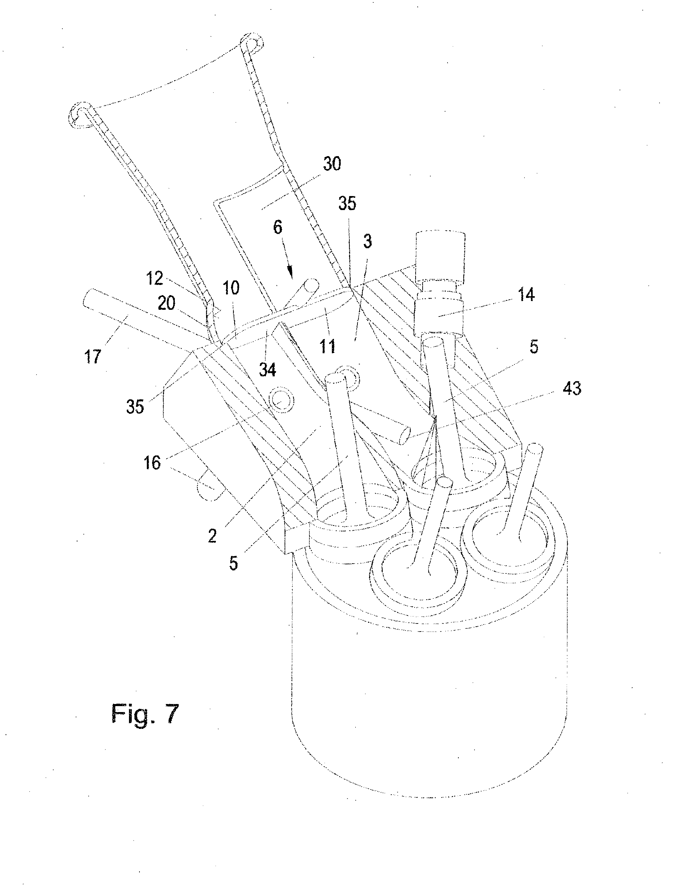

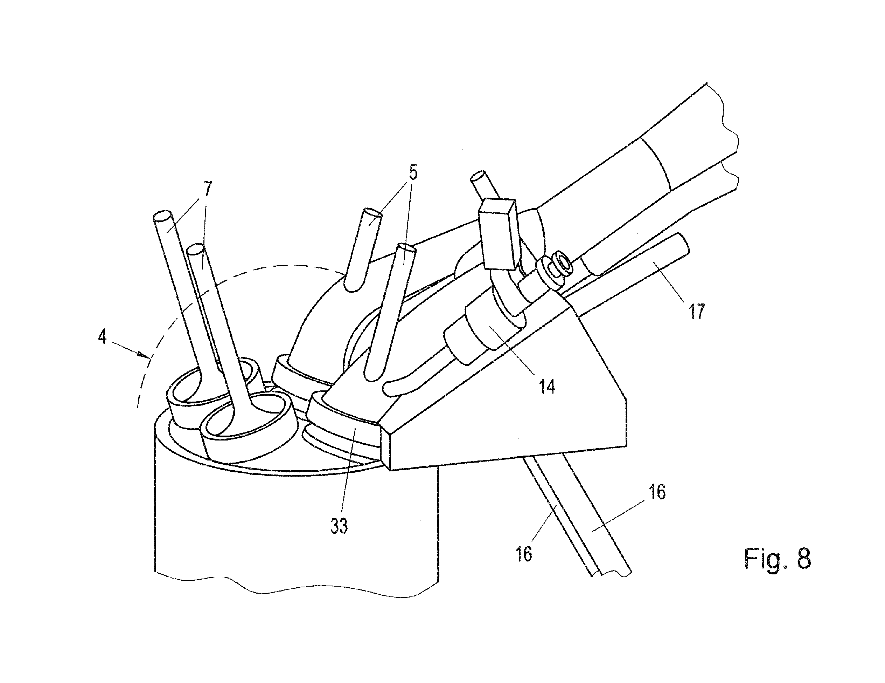

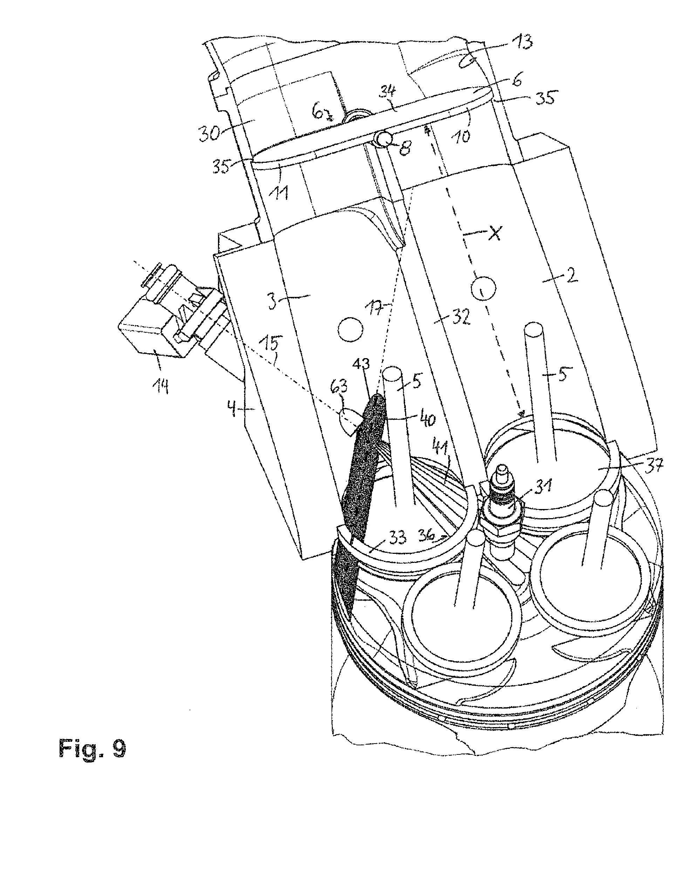

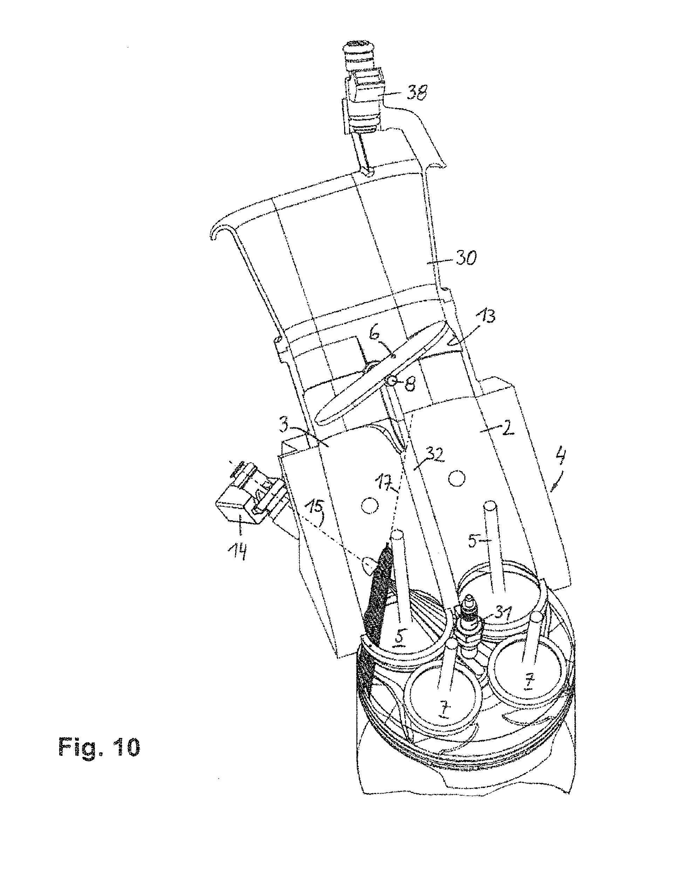

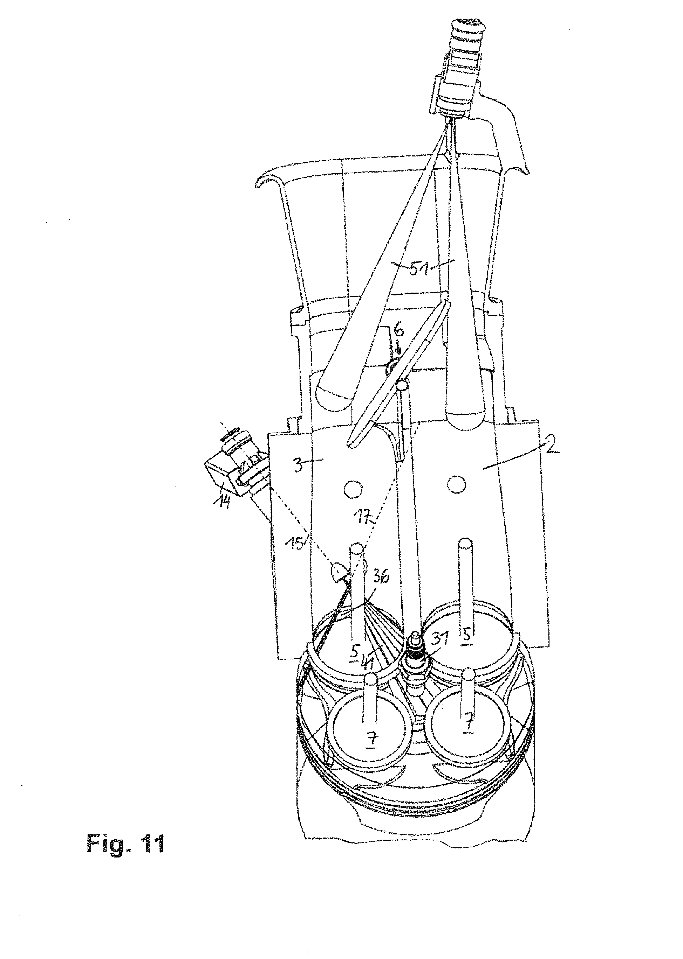

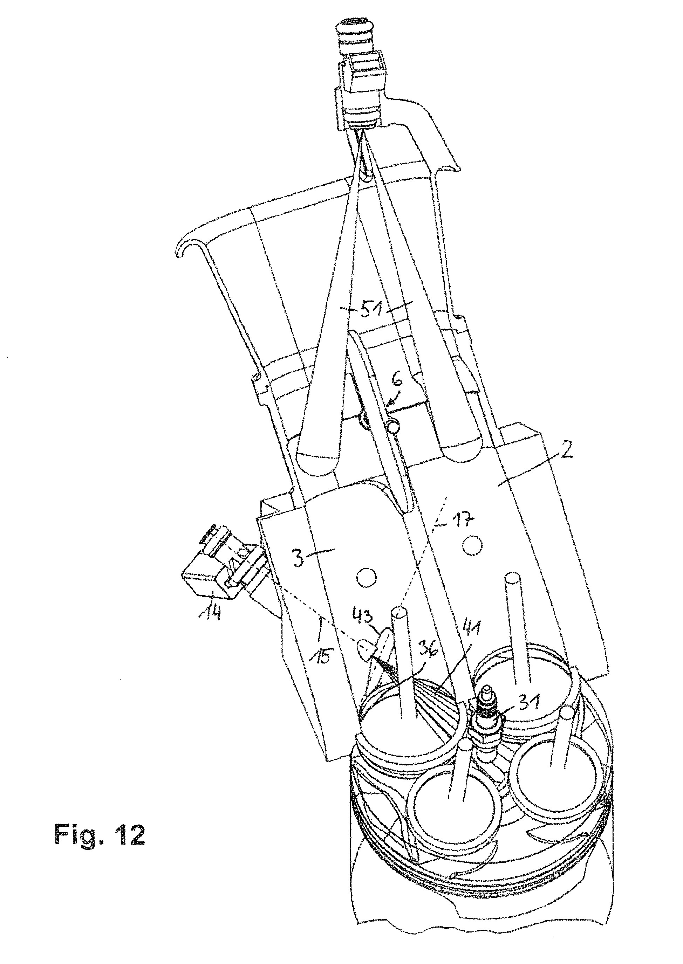

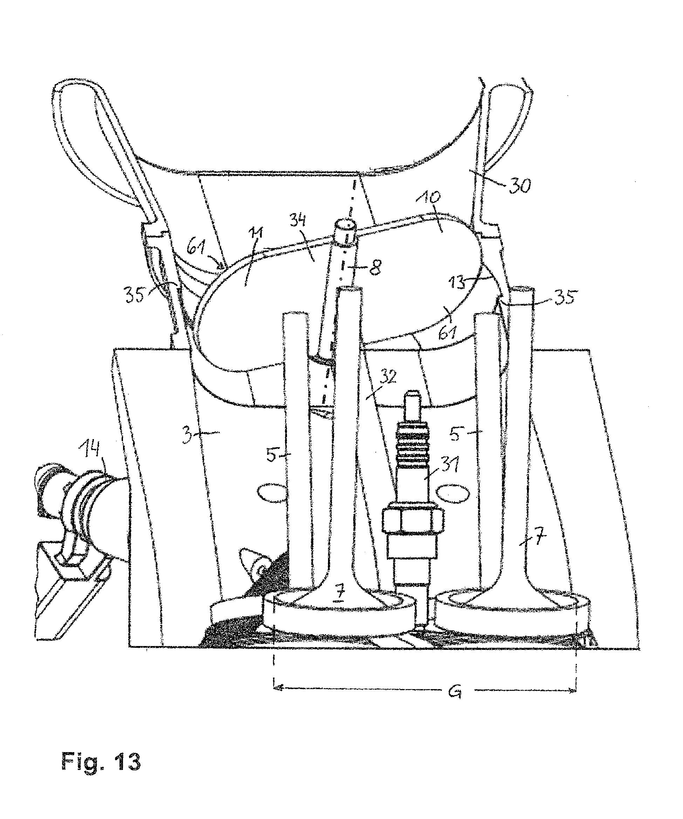

Fig. 1, 2 und 3 zeigen in schematischer Prinzipdarstellung einen Motorzylinder mit einer Einlasskanalanordnung sowie die Anordnung eines Füllkanals 2 und eines Ladungsbewegungskanals 3 mit einer gemeinsamen Drosselklappe 6, die von einem Einlasskanal 30 zu einem aus Klarheitsgründen nicht ausdrücklich dargestellten Zylinderkopf 4 des Motorzylinders 1 führen. Die Drosselklappe 6 befindet sich in Fig. 1 in Sperrstellung, in Fig. 2 in teilweise geöffneter Stellung und in Fig. 3 in vollständiger Offenstellung. Die Fig. 4, 5 und 6 zeigen vergleichbare Abbildungen, wobei auch eine Einspritzeinheit 14 für Kraftstoff dargestellt ist. Fig. 7 zeigt eine Darstellung ähnlich Fig. 1 und 4, wobei Abgasrückführleitungen 16 und ein Leerlaufrohr 17 dargestellt sind. Fig. 8 zeigt eine Ansicht des zum Zylinderkopf geführten Füllkanals 2 und Ladungsbewegungskanals 3, wobei die Lage der diese beiden Kanäle 2, 3 verschließenden Ventile 5 zu erkennen ist. Fig. 9 zeigt die schematische Ansicht eines geöffneten Zylinderkopfes mit einer in Verschlussstellung stehenden Drosselklappe 6. Fig. 10 zeigt eine Ansicht gemäß Fig. 9 mit einer um 30° geöffneten Drosselklappe 6. Fig. 11 zeigt eine Drosselkappe 6, geöffnet um 55°. Fig. 12 zeigt eine Ansicht gemäß Fig. 11 mit vollständig geöffneter Drosselklappe 6. Fig. 13 zeigt eine Großansicht der Drosselklappe 6.

Fig. 1 zeigt schematisch einen Motorzylinder 1, in bzw. an dessen aus Übersichtlichkeitsgründen nicht dargestellten Zylinderkopf 4 ein Füllkanal 2 und ein Ladungsbewegungskanal 3 ausgebildet bzw. angeschlossen sind. Der Füllkanal 2 und der Ladungsbewegungskanal 3 sind jeweils zu einem Ventilsitz 33 eines Einlassventiles 5 geführt, welche Ventile 5 den Verbrennungsraum gegenüber den Kanälen 2, 3 abschließen bzw. freigeben. Eine Drosselklappe 6 kann sowohl den Füllkanal 2 als auch den Ladungsbewegungskanal 3 gleichzeitig verschließen, so wie dies in Fig. 1 dargestellt ist und ferner den Durchfluss durch diese Kanäle 2, 3 regeln. Die im Verbrennungsraum entstehenden Abgase werden über Auslassventile 7 aus dem Verbrennungsraum abgeführt.

In dieser und in den weiteren Zeichnungen sind nur die wesentlichen Bauteile eines Motorzylinders 1 bzw. eines Verbrennungsmotors dargestellt. Ventilsteuerungen oder Einrichtungen zur Steuerung bzw. Verschwenkung der Drosselklappe 6 sind nicht dargestellt. Es werden dazu die dem Fachmann geläufigen Einrichtungen verwendet.

Man erkennt aus Fig. 1 die nebeneinander geführten und in Richtung des Pfeiles 9 durchströmten Kanäle 2, 3. Die Drosselklappe 6 besitzt zwei an einem Mittelbereich 34 anschließende Abschnitte 10 und 11, wobei gemeinsam mit dem Mittelbereich 34 der Abschnitt 10 den Füllkanal 2 und der Abschnitt 11 den Ladungsbewegungskanal 3 verschließen bzw. freigeben kann.

In dem Abschnitt des Einströmkanals 30, der vor dem Füllkanal 2 bzw. vor der Drosselklappe 6 in deren Verschlussstellung liegt, ist eine torusförmige, an den vom Umfang des Abschnittes 10 bei seiner Verschwenkbewegung um die Schwenkachse 8 überstrichenen Flächenbereichs angepasste Innenwandfläche 12 ausgebildet, längs der der Umfang des Abschnitts 10 sich bei einer Verschwenkung dieses Abschnittes 10 in Richtung des Pfeiles 18 entlang bewegt. Dieses dichte oder sehr nahe Entlanggleiten erfolgt über einen Schwenkwinkel A, so wie dieser in Fig. 2 dargestellt ist. Erst nach Überschreiten dieses Schwenkwinkels A erfolgt eine Freigabe des Durchströmquerschnittes des Füllkanals 2. Die torusförmige Ausbildung 13 der Innenwandfläche 12 erstreckt sich über einen Schwenkwinkel A von maximal 40°, vorzugsweise von maximal 35°.

Die Freigabe des Füllkanals 2 erfolgt bei Verschwenkung der Drosselklappe 6 in Öffnungsstellung somit zu einem späteren Zeitpunkt als die Freigabe des Ladungsbewegungskanals 3, sodass die Durchströmung der beiden Kanäle 2, 3 bei unterschiedlichen Stellungen der Drosselklappe 6 einsetzt und damit die durch die Ventile 5 in den Verbrennungsraum zugeführten Frischgasmengen entsprechend unterschiedlich die Verbrennung beeinflussen.

In Fig. 3 ist die Drosselklappe 6 in ihrer vollständigen Offenstellung dargestellt, das heißt parallel zur Durchströmungsrichtung 9 der Kanäle 2 bzw. 3.

Die Drosselklappe 6 ist von einem plattenförmigen Bauteil gebildet, der in seinem Mittelbereich 34, um eine zwischen den beiden Kanälen 2, 3 verlaufende und senkrecht zur Durchströmungsrichtung 9 stehende Schwenkachse 8 verschwenkbar gelagert ist. Um diese Schwenkachse 8 ist die Drosselklappe 6 von einer quer zur Durchströmungsrichtung 9 verlaufenden Verschlussstellung in eine parallel zur Durchströmungsrichtung 9 verlaufende Offenstellung verschwenkbar, so wie diese Stellungen in Fig. 1 und 3 dargestellt sind.

Die Bewegung der Abschnitte 10, 11 ist starr gekoppelt. Der an die Innenwandfläche 12 des Füllkanals 2 - in Durchströmrichtung 9 gesehen - unmittelbar vor der Drosselklappe 6 liegende Bereich, besitzt die torusförmige Ausbildung 13, sodass der Außenumfang des in den Füllkanal 2 ragenden bzw. diesen verschließenden Abschnittes 10 der Drosselklappe 6 bei seiner Schwenkbewegung von der Verschlussstellung in die Offenstellung über den vorgegebenen Schwenkwinkel A noch immer dicht in Anlage an diesem bzw nahe dieser torusförmigen Ausbildung 13 der Innenwandfläche 12 verbleibt.

Der Bereich der Innenwandfläche 12 und die Drosselklappe 6 sind bezüglich einer senkrecht zur Schwenkachse 8 der Drosselklappe 6 stehenden Mittenebene ebenso wie die Drosselklappe 6 zu einer die Schwenkachse 8 enthaltenden Ebene symmetrisch ausgebildet. Der torusförmige Abschnitt bzw. die torusförmige Ausbildung 13 und die Umfangsfläche des an die Innenwandfläche 12 angepassten Abschnittes 10 der Drosselklappe 6 sind über den Bereich des Schwenkwinkels A zueinander dicht geführt.

Die Fig. 4, 5 und 6 entsprechen bezüglich des Aufbaus des Motorzylinders 1 im wesentlichen den Fig. 1, 2 und 3, wobei jedoch eine Einspritzeinheit 14 dargestellt ist, die in dem lediglich schematisch in Fig. 5 angedeuteten Zylinderkopf 4 angeordnet ist. Diese Einspritzeinheit 14 ist derart ausgebildet, dass ihre Sprührichtung 15 den Ventilspalt 36 des den Ladungsbewegungskanal 3 verschließende Ventil 5 in den Verbrennungsraum des Motorzylinders 1 verläuft. Die Sprührichtung 15 verläuft bei geöffnetem Ventil 5 durch den Ventilspalt 36. Damit ergibt sich eine optimale Verwirbelung des eingespritzten Kraftstoffes mit dem zugeführten Frischgas bei geringstmöglicher Wandanlagerung von Kraftstoff im Einlasstrakt 30 bzw. im Ladungsbewegungskanal 3.

Gemäß Fig. 7 münden zwischen der Drosselklappe 6 und den Ventilen 5 in den Füllkanal 2 und in den Ladungsbewegungskanal 3 Abgasrückführungskanäle 16 ein, womit die Verbrennung im Verbrennungsraum positiv beeinflusst werden kann und Ladungswechselverluste verringert werden können.

In den Ladungsbewegungskanal 3 im Bereich zwischen der Drosselklappe 6 und dem Einlassventil 5 mündet ein Leerlaufrohr bzw. Leerlaufluftkanal 17, das bzw. der zur Achse des Ventils 5 windschief verläuft und geneigt zum Ventilspalt 36 des den Ladungsbewegungskanal 3 verschließenden Ventils 5 ausgerichtet ist, in überwiegend tangentialer Einströmrichtung zur Zylinderbohrung, um größtmögliche Ladungsbewegung im Zylinder zu erreichen.

Fig. 8 zeigt eine Außenansicht eines erfindungsgemäßen Motorzylinders 1 mit einem lediglich angedeutetem Zylinderkopf 4. Man erkennt die den Füllkanal 2 und den Ladungsbewegungskanal 3 begrenzenden Rohrleitungen, sowie die Einspritzeinheit 14, die Abgasrückführungskanäle 16, sowie das Leerlaufrohr 17. Anstelle des Leerlaufrohres 17 kann eine gleichgerichtete Bohrung eines Leerlaufluftkanals treten.

Eine für die Verbrennung des Kraftstoff-Luft-Gemisches erforderliche Zündeinheit ist aus Übersichtlichkeitsgründen in Fig. 1 bis 8 nicht dargesteilt und liegt in der Regel in der Mitte zwischen den vorgesehenen Ventilen 5, 7. Prinzipiell können auch mehrere Zündeinheiten vorgesehen sein.

Bei einer Stellung der Drosselklappe 6 in Verschlussstellung, das heißt, bei einem Schwenkwinkel A von 0°, sind der Füllkanal 2 und der Ladungsbewegungskanal 3 geschlossen; die Luftansaugung erfolgt über das Leerlaufrohr 17. Bei einer Stellung der Drosselklappe 6 in einem Schwenkwinkel A von etwa 30° ist der Füllkanal 2 noch immer geschlossen und der Ladungsbewegungskanal 3 ist teilweise geöffnet. Ähnlich wie bei geschlossener Drosselklappe 6 erzeugt das außenmittig bzw. tangential zugeführte Frischgas einen starken Drall und es erfolgen eine gute Vermischung des Frischgases mit dem eingespritzten Kraftstoff und eine hohe Turbulenz im Brennraum, sodass eine schnelle und stabile Verbrennung vorliegt. Bei der beispielsweise in Fig. 6 dargestellten Offenstellung der Drosselklappe 6 bei Volllast bzw. bei völlig geöffneten Durchströmungsquerschnitt des Füllkanals 2 und des Ladungsbewegungskanals 3 ergeben sich eine optimale Strömungsgeschwindigkeit und maximale turbulente kinetische Energie im Zylinderraum, sodass die Verbrennung optimal rasch und stabil abläuft. Durch die Rückführung der Abgase über die Abgasrückführungskanäle 16 kann die Verbrennung eingeregelt bzw. den gewünschten Motorbetriebsbedingungen angepasst werden.

Die Einspritzeinheit 14 sprüht einen Kraftstoffstrahl mit einer Sprührichtung 15 durch den Ventilspalt 36 in den Verbrennungsraum, wobei die Tröpfchendurchmesser in der Regel einen Durchmesser von etwa 20 µm SMD (mittlerer Sauter Durchmesser) besitzen. Damit werden eine gute Gemischbildung, eine geringe Zylinderwandbenetzung, eine stabile Verbrennung und niedrige Emissionswerte erreicht.

Fig. 9 zeigt eine schematische Ansicht eines erfindungsgemäßen Motorzylinders mit einem geöffneten Zylinderkopf bzw. aufgeschnittener Ansaug- bzw. Einlassleitung 30. Die Drosselklappe 6 zeigt einen Schwenkwinkel von 0°, was bedeutet, dass die Drosselklappe 6 dicht geschlossen ist und die Umfangsbereiche der Abschnitte 10 und 11 und des Mittelbereichs 34 der Drosselklappe 6 an den Umfangstufen 35, die im Einlasskanal 30 bzw. den Endbereichen der Kanäle 2, 3 ausgebildet sind, dicht anliegen. Diese Ansicht gibt den Zustand im Leerlauf bzw. bei niedrigster Teillast wieder. Nicht dargestellt ist ein Leerlaufregler, der die durch den Leerlaufluftkanal 17 zugeführte Luftmenge mittels Pulsweitenmodulation regelt. Durch die Mündung 43 des Leerlaufrohres 17 tritt ein Luftstrahl 40 in den Ladungsbewegungskanal 3 ein, der durch den Ventilspalt 36 zwischen dem Ventil 5 und dem Ventilsitz 33 in den Verbrennungsraum eintritt und in tangetialer Richtung auf die Wand der Zylinderbohrung auftrifft und damit starken Drall sowie starken Tumble im Verbrennungsraum erzeugt.

Des weiteren ist ersichtlich, dass die von einer Fächerdüse 63 der Einspritzeinheit 14 fächerförmig abgegebenen Kraftstoffstrahlen 41 den Luftstrahl 40 queren, der durch die Mündung 43 des Leerlaufluftkanals 17 einströmt. Die fächerförmigen Kraftstoffstrahlen 41 treten in den Verbrennungsraum durch den Ventilspalt 36 ein und gelangen in den Verbrennungsraum unterhalb die Zündeinheit 31. In diesem Lastbereich, der für den Leerlauf und niedrigste Teillast vorgesehen ist, ist die Drosselklappe 6 dicht geschlossen und Frischladung strömt nur durch das Leerlaufrohr 17 ein und erzeugt starken Drall kombiniert mit starkem Tumble, das heißt Ladungsbewegung, im Brennraum. Die Kraftstoffstrahlen 41 sowie der Leerlaufluftstrahl 40 sorgen für eine gute Gemischbildung sowie exzellente Verbrennungsstabilität, wobei die Luftmasse durch den nicht dargestellten Leerlaufregler geregelt wird, wozu der Regelkreis die Motordrehzahl berücksichtigt und letztlich ein Absenken der Leerlaufdrehzahl ermöglicht, womit Wirkungsgrad und Verbrauch verbessert werden.

Fig. 10 zeigt die Anorndung gemäß Fig. 9 bei einer Drosselklappenstellung mit einem Schwenkwinkel A von etwa 30°. Durch die Ausbildung 13 der Innenwandfläche des Einlasskanals 30 in Form eines an die Drosselklappe 6 angepassten Torus, bleibt der Füllkanal 2 verschlossen, wogegen der Ladungsbewegungskanal bereits teilweise zur Einströmung geöffnet ist. Diese Stellung der Drosselklappe 6 liegt bei niedriger bis mittlerer Teillast vor. Die gegebenenfalls eine Symmetrieebene für die Kanäle 2, 3 darstellende Trennwand 7 liegt in der Mitte zwischen den beiden Kanälen 2 und 3 und trennt diese Kanäle 2, 3 strikt und wird von den Ventilsitzen 33 strömungsaufwärts bis an die Drosselklappe 6 bzw. deren Schwenkachse 8 geführt, sodass ein Übertritt von Gasen von dem einen in den anderen Kanal nicht stattfinden kann. In dieser Stellung der Drosselklappe ist der Leerlaufluftkanal 17 noch geöffnet und die Kraftstoffeinspritzung erfolgt über die motornahe Einspritzeinheit 14, deren Kraftstoffstrahlen 41 die die durch den Ladungsbewegungskanal 3 und die diesen Kanal 3 teilweise freigebende Drosselklappe 6 einströmende Luftmenge kreuzen. Damit werden der Verbrennungswirkungsgrad erhöht und die Verbrennung beschleunigt, wodurch ein hohes Drehmoment und ein gutes Ansprechverhalten erreicht wird bzw. eine rasche Gasannahme beim Gasgeben erfolgt.

Fig. 11 und 12 zeigen die Ansichten gemäß Fig. 9 und 10 bei einer Stellung der Drosselklappe bei einem Schwenkwinkel A=55° (Fig. 11) sowie einem Schwenkwinkel A=90° (Fig. 12).

Fig. 11 und Fig. 12 zeigen eine Ferndüse bzw. weitere Einspritzeinheit 38, mit der Kraftstoffstrahlen 51 in den drosselnahen Bereich des Füllkanals 2 und des Ladugnsbewegungskanals 3 einspritzbar sind. In diesem Lastbereich, der durch Schwenkwinkel A von 55° bis 90° definiert wird, sind die beiden Kanäle 2, 3 geöffnet. Die fächerartigen Kraftstoffstrahlen 41 werden von der Einspritzeinheit 14 und durch den Ventilspalt 36 in Richtung auf den Bereich unterhalb der Zündeinheit 31 abgegeben. Es kann nach Bedarf weiterhin eine gewisse Menge an Leerlaufluft in den Ventilspait 36 eingeströmt werden, die von den Kraftstoffstrahlen 41 gequert wird, womit die Gemischbildung verbessert und eine Ansammlung von Kraftstoff in dem Leerlaufluftkanal 17 vermieden werden kann. Dies bedeutet, dass über den gesamten Lastbereich bzw. über den gesamten möglichen Schwenkwinkelbereich der Drosselklappe 6 Luft unter Steuerung des Leerlaufluftreglers eingeströmt werden kann. Auch bei der in Fig. 12 dargestellten Stellung der Drosselklappe 6 bei vollständiger Öffnung, kann Leerlaufluft durch die Mündung 43 eingeströmt werden, um ein Rückströmen von Kraftstoff in den Leerlaufluftkanal 17 zu vermeiden.

In diesem Lastbereich der Drosselklappe, der durch einen Schwenkwinkel von etwa 55° bis 90° definiert wird, hat die Drosselklappe 6 die beiden Kanäle 2, 3 freigegeben bzw. geöffnet. Die Strömung in diesen Kanälen 2, 3 konzentriert sich auf den Außenrand bzw. den Wandbereich dieser Kanäle 2, 3 und es erfolgt eine ideale Drall- und Tumble-Ladungsbewegung im Verbrennungsraum. Durch das Einströmen im Außenbereich und eine parallele Führung der Einlasskanäle 2, 3 unterbleibt die Ausbildung eines unerwünschten Omega-Tumble. Eine verbleibende Zufuhr von Leerlaufluft und eine zusätzliche Einspritzung von Kraftstoff durch die Einspitzeinheit 38 ergibt eine Bereitstellung der erforderliche Kraftstoffmenge in ausgesprochen kurzer Zeit, sodass die Einspritzzeit reduziert werden kann.

Fig. 13 zeigt eine vergrößerte Ansicht der Drosselklappe 6. Man erkennt, dass die Schwenkachse 8 der Drosselklappe 6 über die kurze Seite des von der Schwenkachse 8 getragenen mittleren Abschnittes bzw. Mittelbereichs 34 der Drosselklappe 6 verläuft, welcher Mittelbereich 34 die Form eines Rechteckes besitzt. Es ist vorgesehen, dass die der Schwenkachse 8 entfernt liegenden Umfangsbereiche 11 der die Kanäle 2, 3 verschließenden Abschnitte 10, 11 der Drosselklappe 6 gerundet, insbesondere halbelliptisch oder halbkreisförmig oder halboval gerundet, ausgebildet sind.

Ferner ist vorgesehen, dass die Drosselklappe 6 in ihrer Verschlussstellung zumindest über Teilbereiche ihres Umfanges, vorzugsweise über ihren gesamten Umfang oder den gesamten Umfang 61 der Abschnitte 10, 11 an die von dem Ladungsbewegungskanal 3 und dem Füllkanal 2 gebildeten Wandflächen, vorzugsweise gasdicht, anliegt.

Die in Fig. 13 nur angedeutete Trennwand 32 schließt in ihrem Endbereich mit der Schwenkachse dicht ab. Es ist ferner vorgesehen, dass die Drosselklappe 6 von einer Platte gebildet ist, die einen rechteckigen oder quadratischen Mittelbereich 34 umfasst, an den an gegenüberliegenden Seiten jeweils ein von einem Halbkreis oder von einer Halbellipse oder von einem Halboval gebildeter Abschnitt 10, 11 anschließt.

Des weiteren ist vorgesehen, dass die Schwenkachse 8 längs der kürzeren Mittelachse der Drosselklappe 6 verläuft und/oder senkrecht zu den freien Seiten des Mittelbereichs 34 verläuft und/oder parallel zur Ebene der Trennwand 32 und senkrecht zu deren Längserstreckung in ihrem schwenkachsennahen Bereich ausgerichtet ist.

Man erkennt aus Fig. 13, dass der Umfangsbereich des Abschnittes 10 bei einem Verschwenken um die Schwenkachse 8 einen torusförmigen Raumbereich beschreibt. Der Abschnitt 10 der Drosselklappe 6 bewegt sich längs des Abschnitts 13 mit torusförmiger Gestalt, der in der Innenwandfläche des Einlasskanals 30 ausgebildet ist.

Die Anordnung einer Drosselklappe 6 mit einem rechteckigen oder quadratischen Mittelteil 34 und daran anschließenden halbkreisförmigen, halbelliptische oder halbovalen Abschnitten 10 bzw. 11 ermöglicht, dass die Innenwandflächen der Kanäle 2, 3 und/oder die im Bereich der Drosselklappe 6 liegende Innenwand des Ansaugkanals 30, ausgenommen die Ausbildung 13 jeweils für sich und/oder untereinander parallele Erzeugende aufweisen. Die Kanäle 2, 3 bzw. 30 können somit mit paralleler Kanalberandung bis zu dem jeweiligen Ventilsitz 33 geführt werden, womit die Durchflusswerte verbessert und abrupte Übergänge mit engen Radien vermieden werden.

Durch die anfänglich einseitig erfolgende Öffnung der Kanäle bzw. Öffnung, d. h. lediglich Öffnung des Ladungsbewegungskanals 3 über einen Schwenkwinkel von 0 bis beispielsweise 35°, ergibt sich durch die tangential einströmende Leerlaufluft eine entsprechende Ladungsbewegung aufgrund der saugsynchron eingespritzten Gemischwolke bzw. der fächerförmig eingespritzten Kraftstoffstrahlen 41, womit die Gemischwolke im Verbrennungsraum nach unten bewegt wird. Bei geöffneter Drosselklappe 6 ergibt sich in einem Schwenkwinkelbereich von 50° bis 90° eine optimale Tumble-Ladungsbewegung im Brennraum mit einer Tumbleziffer von zirka 0,7.

Die Drosselklappe 6 steht in ihrer Verschlussstellung mit ihrer Längsachse etwa parallel zur Verbindungslinie der Mittelpunkte der Ventile 5, die den Füllkanal 2 und den Ladungsbewegungskanal 3 brennraumseitig verschließen. Da ferner die Schwenkachse senkrecht zu der Längsrichtung der Drosselklappe 6 bzw. dieser Verbindungslinie der Ventile 5 bzw. der Ventilsitze 33 verläuft, ergibt sich eine geringstmögliche Versperrung des Einlasskanals 30 bzw. der Kanäle 2, 3 durch die Drosselklappe 6 in Offenstellung der Drosselklappe 6. Es zeigt sich als zweckmäßig, wenn die Längsachse der Drosselklappe 6 der maximalen, gegebenenfalls um maximal 10% vergrößerten, Gesamterstreckung G der Ventilöffnungen der Ventile 5 der Kanäle 2, 3 und die Querachse der Drosselklappe 6 dem, gegebenenfalls um maximal 10% vergrößerten, Innendurchmesser eines Ventilsitzringes 33 entspricht.

Der Einlasskanal 30 bzw die Kanäle 2, 3 mit parallel verlaufenden Erzeugenden können größer gestaltet werden, als bekannte A-förmige Einlasskanäle, die runde Drosselklappen vorsehen. An sich würde durch einen größeren Kanalquerschnitt die Verbrennung in Teillast verschlechtert; eine derartige Verschlechterung wird allerdings erfindungsgemäß durch die Maskierung des Füllkanals 2, das heißt Versperrung dieses Füllkanals 2, in einem Bereich von 0° bis etwa 35° des Schwenkwinkels überkompensiert, sodass sowohl ein besseres Teillastverhalten als auch eine höhere Spitzenleistung resultieren.

Eine derartige Verbesserung wird auch bei einer ovalen Drosselklappe erreicht, deren Umfangsform von der die besten Ergebnisse zeigenden Drosselklappe mit einem rechtförmigen Mittelbereich 34 und daran anschließenden halbkreisförmigen oder elliptischen Abschnitten 10 und 11 nur gering abweicht. Auch bei oval geformten Drosselklappen wird eine Verbesserung der Leistung erreicht, insbesondere durch Maskieren bzw. Abschließen des Füllkanals 2 im Schwenkwinkelbereich von 0 bis 35°.

Der obere Grenzwert für den Schwenkwinkel bis zu dem eine Maskierung bzw ein Abschließen des Füllkanals 2 erfolgt, ist in gewissen Bereichen wählbar und hängt insbesondere von der Bauart, Größe, Form und den Lastbedingungen des Zylinders ab.

Es zeigte sich, dass es für die Verbrennung von Vorteil ist, wenn die Mündung 43 des Leerlaufluftkanals 17 eine Fläche besitzt, die um 50 bis 100 % größer ist als die Fläche von Mündungen von Leerlaufluftkanälen für Zylinder gleichen Volumens und/oder gleicher Leistung. Die Wahl der Fläche ist einfach durchführbar, wie im Folgenden ausgeführt.

Beispielsweise hat ein Saugmotor mit einem Zylindervolumen von Vh=1200cm³ eine indizierte Leistung im Leerlauf mit Drehzahl n von ca. 0,8 kW; dies ist die Leistung zur Überwindung der Reibungsverluste. Der Reibmitteldruck FMEP (FrictionMeanEffectivePressure) ist ca. 0.9 bar für eine Drehzahl von 900 rpm. Die Leistung P = FMEP . Vh . n /1200 = 0,9 . 1,2 . 900/1200 = 0,81 kW.

Mit einem indizierten Leerlaufverbrauch von ca. 800 g/kWh ergibt sich ein Kraftstoffverbrauch von B = 800 x 0,81 = 648 g/h = 648/3600 = 0,18 g/s. Mit einem Kraftstoff/Luftverhältnis von ca. 1 und einem stoichiometrischen Kraft/Luftverhältnis von 14,75 kgLuft/kgBrennstoff ist der Luftverbrauch BLuft = 0,18 . 1 . 14,75 = 2,66 gLuft/s bei einer Luftdichte von 1,167 kg/m3 und einem Luftvolumensstrom von 2,66 /1,167 . 1000 = 0,00227 m3/s.

Bei einer angestrebten Luftgeschwindigkeit im Leerlaufrohr von ca. 50 m/s wird dafür ein Querschnitt von 0,002275 / 50 = 0,000455 m2 = 45,5 mm2 benötigt.

Diese Leerlaufbohrungs-Querschnittsfläche teilt sich auf alle Zylinder auf, sodass beispielsweise ein 2-Zylindermotor eine Leerlaufbohrung von 22,7mm2 aufweist, was einem Kreisdurchmesser von 5,4mm Durchmesser für jeden Zylinder entspricht.

Bei dem erfindungsgemäßen Motorzylinder wird bewusst ein um 50% bis 100% größerer Leerlaufquerschnitt vorgesehen, was für das obige Beispiel eine Leerlauf-Luftbohrung von 34mm2 bis 45,5mm2 und entsprechende Kreisdurchmesser von 6,6mm bis 7,6mm ergibt.

Vorteilhaft für die nutzbringende Funktion der größeren Leerlaufbohrung zur Unterstützung der Ladungsbewegung und Gemischbildung in der unteren Teillast ist eine fein auflösende, schnelle Luftmengenregelung, die vorzugsweise von einem Stellventil mit PWM (PulseWeitenModulation) angesteuert wird und die als Regelgrößen das Ausgangssignal der Lambdasonde im Auslass und die Leerlaufdrehzahl heranzieht.

Die mit hoher Strömungsgeschwindigkeit von 50 m/sec im Leerlaufrohr zugeführte Luft kreuzt den fächerartigen motornahen Einspritzstrahl 41 und sorgt für exzellente Gemischbildung und Homogenisierung.

Gerade in niedrigen Lastbereichen haben Saugrohr-Einspritzmotoren üblicherweise eine schlechte Gemischbildung und Homogenisierung, sodass zumeist nicht saugsynchron eingespritzt werden kann, da dann die Zeit für die Gemischbildung fehlt.

## Patentansprüche

1. Motorzylinder mit einem Füllkanal (2) und einem Ladungsbewegungskanal (3), die nebeneinanderliegend jeweils zu einem im Zylinderkopf (4) des Motorzylinders (1) gelegenen Einlassventil (5) geführt sind, wobei
die Durchströmung der beiden Kanäle (2, 3) von einer gemeinsamen, sich in die oder über die beiden Kanäle (2, 3) bzw. deren Einströmöffnungen erstreckenden Drosselklappe (6) geregelt ist, mit der die brennraumfernen Endbereiche der beiden Kanäle (2, 3) bzw. deren Einströmöffnungen verschließbar sind,
**dadurch gekennzeichnet,**
- **dass** im Zylinderkopf (4) eine Einspritzeinheit (14) angeordnet ist, deren Einspritzrichtung (15) durch das den Ladungsbewegungskanal (3) verschließende Einlassventil (5) in den Verbrennungsraum des Motorzylinders (1) gerichtet verläuft, wobei die Einspritzrichtung (15) der Einspritzeinheit (14) durch den zwischen dem Ventilsitz (33) und dem Ventilteller (37) ausgebildeten Ventilspalt (36) verläuft,
- **dass** in den Ladungsbewegungskanal (3) im Bereich zwischen der Drosselklappe (6) und dem Einlassventil (5) ein zur Achse des Einlassventils (5) windschief verlaufendes(r) und auf den Ventilspalt (36) des offenen Einlassventils (5) ausgerichtetes(r) Leertaufrohr oder Leerlaufluftkanal (17) einragt oder einmündet, und
- **dass** die in den Ladungsbewegungskanal (3) mündende Einspritzeinheit (14) eine Fächerdüse (63) aufweist, mit der Kraftstoff fächerförmig durch den Ventilspalt (36) des den Ladungsbewegungskanal (3) abschließenden Einlassventils (5) in den Zylinder in einen Bereich einspritzt, der unterhalb einer im Zylinderkopf im Mittelbereich der Zylinderbohrung angeordneten Zündeinheit (31) liegt, wobei die Einstrahlebene der fächerförmigen Kraftstoffstrahlen (41) von dem Strahl der durch den Leerlaufluftkanal (17) eingeströmten Verbrennungsluft (40) geschnitten wird.

2. Motorzylinder nach Anspruch 1, **dadurch gekennzeichnet, dass** die Drosselklappe (6) ein plattenförmiger Bauteil ist, der in seinem mittleren Bereich (34) um eine zwischen den beiden Kanälen (2, 3) verlaufende und senkrecht zur Durchströmungsrichtung (9) der Kanäle (2, 3) stehende Schwenkachse (8) verschwenkbar gelagert ist.

3. Motorzylinder nach Anspruch 2, **dadurch gekennzeichnet, dass** die Drosselklappe (6) zwei an ihren Mittelbereich (34) anschließende Abschnitte (10, 11) aufweist, die jeweils in einem Kanal (2, 3) liegen oder jeweils gemeinsam mit dem Mittelbereich einen Kanal (2, 3) verschließen oder in diesen ragen, wobei die Drosselklappe (6) um ihre Schwenkachse (8) von einer quer zur Durchströmungsrichtung (9) verlaufenden Verschlussstellung in eine parallel zur Durchströmungsrichtung (9) verlaufende Offenstellung verschwenkbar ist.

4. Motorzylinder nach Anspruch 3, **dadurch gekennzeichnet, dass** die beiden benachbart der Schwenkachse (8) liegenden bzw. an die beiden Seiten der Schwenkachse (8) anschließenden Abschnitte (10, 11) der Drosselklappe (6) in der selben Ebene liegen und jeweils in einen der beiden Kanäle (2, 3) ragen und in beiden Kanälen (2, 3) Schwenkbewegungen mit gleicher Drehrichtung vollführen.

5. Motorzylinder nach einem der Ansprüche 1 bis 4, **dadurch gekennzeichnet, dass** eine Innenwandfläche (12) des Ansaugkanals (30) in ihrem - in Durchströmungsrichtung (9) gesehen unmittelbar vor der Drosselklappe (6) bzw. dem Füllkanal (2) liegenden Bereich - eine torusförmige Ausformung (13) besitzt, die an den vom Umfang des in den Füllkanal (2) ragenden oder diesen verschließenden Abschnittes (10) der Drosselklappe (6) bei seiner Schwenkbewegung von der Offenstellung in die Verschlussstellung überstrichenen Raumbereich angepasst ist, wobei sich der Torus über den von dem Randbereich der Drosselklappe (6) bei seiner Verstellbewegung überstrichenen Winkelbereich oder Schwenkwinkel A erstreckt, und 0 < A ≤ 40°, vorzugsweise 0 < A ≤ 35°, ist, und ein Winkel A von 0° der Verschlussstellung der Drosselklappe (6) entspricht.

6. Motorzylinder nach Anspruch 5, **dadurch gekennzeichnet, dass** der Bereich der Innenwandfläche (12) mit der torusförmigen Ausformung (13) und die Drosselklappe (6) bezüglich einer senkrecht zur Schwenkachse (8) der Drosselklappe (6) stehenden Ebene und/oder die Drosselklappe (6) und/oder die Kanäle (2, 3) bezüglich einer die Schwenkachse (8) enthaltenden Ebene symmetrisch ausgebildet sind und/oder dass die der Schwenkachse (8) entfernt liegenden Umfangsbereiche (11) der die Kanäle (2, 3) verschließenden Abschnitte (10, 11) der Drosselklappe (6) gerundet, insbesondere halbelliptisch oder halbkreisförmig oder halboval gerundet, ausgebildet sind und/oder dass die Drosselklappe (6) von einer ovalen Platte gebildet ist und/oder dass die Drosselklappe (6) von einer Platte gebildet ist, die einen rechteckigen oder quadratischen Mittelbereich (34) umfasst, an den an gegenüberliegenden Seiten jeweils ein von einem Halbkreis oder von einer Halbellipse oder von einem Halboval gebildeter Abschnitt (10, 11) anschließt und/oder dass die Schwenkachse (8) längs der kürzeren Mittelachse der Drosselklappe (6) verläuft und/oder senkrecht zu den freien Seiten des Mittelbereichs (34) verläuft und/oder parallel zur Ebene der Trennwand (32) und senkrecht zu deren Längserstreckung in ihrem schwenkachsennahen Bereich ausgerichtet ist.

7. Motorzylinder nach einem der Ansprüche 5 oder 6, **dadurch gekennzeichnet, dass** die torusförmige Ausformung (13) der Innenwandfläche (12) des Einström- bzw. Ansaugkanals (30) und die Umfangsfläche des an die Innenwandfläche (12) angepassten Abschnittes (10) der Drosselklappe (6) über den Bereich des Schwenkwinkels A zueinander dicht oder nahe zueinander liegend geführt sind und/oder dass der Wandbereich mit der torusförmigen Ausformung (13) der Innenwandfläche (12) eine Ausbuchtung (20) der Wand des Einström- bzw. Ansaugkanals (30) darstellt und/oder dass die torusförmige Ausformung (13) der Innenwandfläche (12) über einen Winkelbereich von maximal 40°, vorzugsweise maximal 35°, ausgehend von der durch die Verschlussstellung der Drosselklappe (6) definierten Ebene, verläuft, wobei der Scheitel des Winkels in der Schwenkachse (8) liegt.

8. Motorzylinder nach einem der Ansprüche 1 bis 7, **dadurch gekennzeichnet, dass** im Bereich zwischen der Drosselklappe (6) und dem jeweiligen Einlassventil (5) in den Füllkanal (2) und in den Ladungsbewegungskanal (3) jeweils zumindest ein Abgasrückführungskanal (16) einmündet und/oder dass im Zylinderkopf (4) zumindest eine in den Verbrennungsraum ragende Zündeinheit (31) angeordnet ist und/oder dass in den Ansaugkanal (30) eine zylinderferne Kraftstoffeinspritzeinheit (38) einmündet, mit der gesteuert Kraftstoff in die drosselnahen Anfangsbereiche des Füllkanals (2) und/oder Ladungsbewegungskanals (3) einspritzbar ist.

9. Motorzylinder nach einem der Ansprüche 1 bis 8, **dadurch gekennzeichnet, dass** das Leerlaufrohr oder der Leerlaufluftkanal (17) eine zur Zylinderbohrung tangentiale Einströmrichtung besitzt und vorteilhafterweise auf den dem Ventilsitz dieses Einlassventils (5) nahe liegenden Wandbereich der Zylinderbohrung, insbesondere nach unten in Richtung auf die Zylinderbohrung, gerichtet ist.

10. Motorzylinder nach einem der Ansprüche 1 bis 9, **dadurch gekennzeichnet, dass** die Drosselklappe (6) in ihrer Verschlussstellung zumindest über Teilbereiche ihres Umfanges, vorzugsweise über ihren gesamten Umfang oder den gesamten Umfang (61) der Abschnitte (10, 11) an die von dem Ladungsbewegungskanal (3) und dem Füllkanal (2) gebildeten Wandflächen, vorzugsweise gasdicht, anliegt und/oder dass die Drosselklappe (6) in ihrer Verschluss- und/oder Leerlaufstellung oder in Stellung bei niedrigster Teillast die beiden Kanäle (2, 3) dicht abschließt und/oder dass in den drosseinahen Anfangsbereichen der beiden Kanäle (2, 3) längs des Umfanges des Einlasskanals (30) verlaufende Anlagestufen (35) für Umfangsbereiche (61), vorzugsweise für den gesamten Umfangsbereich, der Drosselklappe (6) ausgebildet sind.

11. Motorzylinder nach einem der Ansprüche 1 bis 10, **dadurch gekennzeichnet, dass** sich die zwischen den nebeneinander liegenden Kanälen (2, 3) ausgebildete Trennwand (32) von dem zwischen benachbarten Einlassventilen (5) bzw. Ventilsitzen (33) liegenden, zylindernahen Bereich der Kanäle (2, 3) bis zur Bohrung oder Lagerung der Schwenkachse (8) der Drosselklappe (6) erstreckt und/oder dass die Trennwand (32) in ihrem zylinderfernen Endbereich mit der Schwenkachse (8) dicht abschließt oder an dieser dicht anliegt oder dass die Schwenkachse (8) in dem Endbereich die Schwenkachse (8) gelagert ist.

12. Motorzylinder nach einem der Ansprüche 1 bis 11, **dadurch gekennzeichnet, dass** die Längsachse der Drosselklappe (6) der maximalen, gegebenenfalls um maximal 10% vergrößerten, Gesamterstreckung (G) der Ventilöffnungen der Ventile (5) der Kanäle (2, 3) und die Querachse der Drosselklappe (6) dem, gegebenenfalls um maximal 10% vergrößerten, Innendurchmesser eines Ventilsitzringes (33) entspricht und/oder dass die Einmündung (43) des Leerlaufluftkanals (17) in den Ladungsbewegungskanal (3) zwischen der Drosselklappe (6) und dem Ventilsitzring (33) in einem Bereich von 0 bis 35 %, vorzugsweise 0 bis 30 %, dieses Abstands (X) oberhalb des Ventilsitzrings (33) ausgebildet ist und zylinderseitig vorzugsweise bis zum Ventilsitzring (33) geführt ist oder diesen berührt und/oder dass die Einspritzeinheit (14) im Ladungsbewegungskanal (3) zwischen der geschlossenen Drosselklappe (6) und dem Ventilsitzring (33) in einem Bereich von 5 bis 30 %, vorzugsweise 10 bis 20 %, dieses Abstands (X) oberhalb des Ventilsitzrings (33) angeordnet ist oder einmündet.

13. Motorzylinder nach einem der Ansprüche 1 bis 12, **dadurch gekennzeichnet, dass** die Innenwandflächen der Kanäle (2, 3) und/oder die im Bereich der Drosselklappe (6) liegende Innenwand des Ansaugkanals (30), ausgenommen die Ausformung (13), jeweils für sich und/oder untereinander parallele Erzeugende aufweisen.

14. Motorzylinder nach einem der Ansprüche 1 bis 13, **dadurch gekennzeichnet, dass** die Mündung (43) des Leerlaufluftkanals (17) eine Fläche besitzt, die um 50 bis 100 % größer ist als die Fläche von Mündungen von Leerlaufluftkanälen für Zylinder gleichen Volumens und/oder gleicher Leistung und/oder dass dem Leerlaufluftkanal (17) ein Leerlaufluftregler vorgeschaltet ist und für jeden Zylinder nur ein Leerlaufluftkanal (17) vorgesehen bzw, ausgebildet ist und/oder dass der Leerlaufluftregler bei einer im Winkel von 30 bis 90° geöffneten Drosselklappe (6) den Durchfluss durch die Mündung des Leerlaufluftkanals (17) auf einen vorgegebenen, minimalen, von Null unterschiedlichen Durchflusswert einstellt.

15. Verbrennungsmotor mit zumindest einem Motorzylinder nach einem der Ansprüche 1 bis 14.

## Claims

1. An engine cylinder having a filling channel (2) and a charge movement channel (3), which adjoining each other are each guided to an inlet valve (5) situated in the cylinder head (4) of the engine cylinder (1), wherein
through-flow of both channels (2, 3) is regulated by a common throttle valve (6) extending into the or via the two channels (2, 3) or their inflow openings, with which the end areas of both channels (2, 3) distant from the combustion chamber or their inflow openings are closable,
**characterized in**
- **that** in the cylinder head (4) an injection unit (14) is arranged, the injection direction (15) of which runs directed through the inlet valve (5) closing the charge movement channel (3) into the internal combustion chamber of the engine cylinder (1), wherein the injection direction (15) of the injection unit (14) runs through the valve gap (36) formed between the valve seat (33) and the valve plate (37),
- **that** an idle pipe or idle air channel (17) running obliquely to the axis of the inlet valve (5) and aligned to the valve gap (36) of the open inlet valve (5) protrudes or leads into the charge movement channel (3) in the area between the throttle valve (6)
and the inlet valve (5), and
- **that** the injection unit (14) leading into the charge movement channel (3) has a fan nozzle (63), with which fuel injects fan-shaped through the valve gap (36) of the inlet valve (5) closing the charge movement channel (3) into the cylinder in an area, which lies beneath an ignition unit (31) arranged in the cylinder head in the middle section of the cylinder bore, wherein the irradiation plane of the fan-shaped fuel jets (41) is cut by the jet of the combustion air (40) flowing in through the idle air channel (17).

2. An engine cylinder according to claim 1, **characterized in that** the throttle valve (6) is a plate-shaped component, which is pivotally mounted in its middle section (34) about a pivot axis (8) running between the two channels (2, 3) and situated perpendicular to the direction of through-flow (9) of the channels (2, 3).

3. An engine cylinder according to claim 2 **characterized in that** the throttle valve (6) has two sections (10, 11) connecting to its middle section (34), which in each case lie in a channel (2, 3) or in each case together with the middle section close a channel (2, 3) or protrude into the latter, wherein the throttle valve (6) can be pivoted about its pivot axis (8) from a closing position running transversely to the direction of the through-flow (9) into an open position running parallel to the direction of the through-flow (9).

4. An engine cylinder according to claim 3, **characterized in that** the two sections (10, 11) of the throttle valve (6) lying adjacent to the pivot axis (8) or connecting to both sides of the pivot axis (8) lie in the same plane and in each case protrude into one of the two channels (2, 3) and in both channels (2, 3) perform pivoting motions in the same direction of rotation.

5. An engine cylinder according to one of claims 1 to 4, **characterized in that** an inner wall surface (12) of the intake channel (30) in its area - seen in the through-flow direction (9) lying immediately in front of the throttle valve (6) or the filling channel (2) -, has a torus-shaped form (13), which is adapted to the spatial area swept from the circumference of the section (10) of the throttle valve (6) protruding into the filling channel (2) or closing the latter during its pivoting motion from the open position into the closing position, wherein the torus extends over the angle range or the pivot angle A swept from the edge area of the throttle valve (6) during its adjustment movement, and 0 <A ≤ 40º, preferably 0 < A ≤ 35º, and an angle A of 0º corresponds to the closing position of the throttle valve (6).

6. An engine cylinder according to claim 5 **characterized in that** the area of the inner wall surface (12) with the torus-shaped form (13) and the throttle valve (6) are designed symmetrically with regard to a plane perpendicular to the pivot axis (8) of the throttle valve (6) and/ or the throttle valve (6) and/or the channels (2, 3) with regard to a plane containing the pivot axis (8) and/or that the circumferential areas (11) lying distant from the pivot axis (8) of the sections (10, 11) closing the channels (2, 3) of the throttle valve (6) are designed rounded, in particular, are rounded semi-elliptically or semi-circularly or semi-ovally and/or that the throttle valve (6) is formed from an oval plate and/or that the throttle valve (6) is formed from a plate, which comprises a rectangular or quadratic middle section (34), to which on opposite sides in each case a section (10, 11) formed from a semicircle or from a semi-ellipse or from a semi-oval connects and/or that the pivot axis (8) runs alongside of the shorter middle axis of the throttle valve (6) and/or runs perpendicular to the free sides of the middle section (34) and/or is aligned parallel to the plane of the partition wall (32) and perpendicular to its longitudinal extension in its area near to the pivot axis.

7. An engine cylinder according to claim 5 or 6, **characterized in that** the torus-shaped form (13) of the inner wall surface (12) of the inflow or intake channel (30) and the circumferential surface of the section of the throttle valve (6) adapted to the inner wall surface (12) are guided over the area of the pivot angle A lying close to each other or nearby each other and/or that the wall area with the torus-shaped form (13) of the inner wall surface (12) constitutes a bulge (20) of the wall of the inflow- or intake channel (30) and/or that the torus-shaped form (13) of the inner wall surface (12) runs over an angle range of maximally 40º, preferably maximally 35º, proceeding from the plane defined by the closing position of the throttle valve (6), wherein the vertex of the angle lies in the pivot axis (8).

8. An engine cylinder according to one of claims 1 to 7, **characterized in that** in the area between the throttle valve (6) and the respective inlet valve (5) in each case at least one exhaust gas recirculation channel (16) leads into the filling channel (2) and into the charge movement channel (3) and/or that in the cylinder head (4) at least one ignition unit (31) is arranged protruding into the combustion chamber and/or that a fuel injection unit (38) distant from the cylinder leads into the intake channel (30) with which controlled fuel can be injected into the initial areas of the filling channel (2) near the throttle and/or of the charge movement channel (3).

9. An engine cylinder according to one of claims 1 to 8, **characterized in that** the idle pipe or the idle air channel (17) has an inflow direction tangential to the cylinder bore and advantageously is directed towards the wall area of the cylinder bore lying near to the valve seat of this inlet valve (5), in particular downwards in the direction towards the cylinder bore.

10. An engine cylinder according to one of claims 1 to 9, **characterized in that** the throttle valve (6) in its closed position at least over sub-areas of its circumference, preferably over its entire circumference or the entire circumference (61) of the sections (10, 11) abuts against the wall surfaces formed by the charge movement channel (3) and the filling channel (2), preferably gas-tight, and/or that the throttle valve (6) in its closed and/or idle position or in the position at the lowest partial load closes the two channels (2, 3) tight and/or that in the initial areas of both channels (2, 3) near the throttle system steps (35) running along the circumference of the inlet channel (30) are designed for the circumferential areas (61), preferably for the entire circumferential area, of the throttle valve (6).

11. An engine cylinder according to claims 1 to 10, **characterized, in that** the partition wall (32) formed between the channels (2, 3) lying next to each other extend from the area of the channels (2, 3) near the cylinder lying adjacent to the inlet valves (5) or the valve seats (33) up to the borehole or bearing of the pivot axis (8) of the throttle valve (6) and/or that the partition wall (32) closes tight with the pivot axis (8) in its end area distant from the cylinder or abuts tight against the latter or that the pivot axis (8) is mounted in the end area of the pivot axis (8).

12. An engine cylinder according to one of claims 1 to 11, **characterized in that** the longitudinal axis of the throttle valve (6) corresponds to the maximally, if necessary, by maximally 10%, enlarged total extension (G) of the valve openings of the valves (5) of the channels (2, 3) and the transverse axis of the throttle valve (6) corresponds, to the , if necessary, by maximally 10%, enlarged inner diameter of a valve seat ring (33) and/or that the junction (43) of the idle air channel (17) in the charge movement channel (3) between the throttle valve (6) and the valve seat ring (33) is formed in a range of 0 to 35%, preferably 0 to 30% of the distance (X) above the valve seat ring (33) and is guided on the cylinder side preferably up to the valve seat ring (33) or touches the latter and/or that the injection unit (14) is arranged in or leads to the charge movement channel (3) between the closed throttle valve (6) and the valve seat ring (33) in a range of 5 to 30%, preferably 10 to 20%, of this distance (X) above the valve seat ring (33).

13. An engine cylinder according to one of claims 1 to 12, **characterized in that** the inner wall surfaces of the channels (2, 3) and/or the inner wall of the intake channel (30) lying in the area of the throttle valve (6), except for the form (13), in each case have a separate and/or mutually parallel generating function.

14. An engine cylinder according to one of claims 1 to 13, **characterized in that** the junction (43) of the idle air channel (17) has a surface area, which is larger by 50 to 100% than the surface area of the junctions of idle air channels for cylinders of the same volume and/or the same output and/or that an idle air regulator is upstream of the idle air channel (17) and only one idle air channel (17) is provided or is designed for each cylinder and/or that the idle air regulator in the case of a throttle valve (6) opened at an angle of 30 to 90º sets the through-flow through the opening of the idle air channel (17) at a preset, minimal, flow-through value different from zero.

15. An internal combustion engine with at least one engine cylinder according to one of claims 1 to 14.

## Revendications

1. Cylindre moteur, comportant un canal de remplissage (2) et un canal de déplacement de la charge (3) qui sont guidés côte à côte respectivement vers une soupape d'admission (5) située dans la culasse (4) du cylindre moteur (1),
la circulation à travers les deux canaux (2, 3) étant réglée par une soupape d'étranglement (6) commune, qui s'étend dans ou au-dessus des deux canaux (2, 3) ou de leurs orifices d'entrée et qui permet d'obturer les zones d'extrémité, éloignées de la chambre de combustion, des deux canaux (2, 3) ou leurs orifices d'entrée,
**caractérisé**
- **en ce que** dans la culasse (4) est disposée une unité d'injection (14) dont le sens d'injection (15) s'étend à travers la soupape d'admission (5) obturant le canal de déplacement de la charge (3) vers la chambre de combustion du cylindre moteur (1), le sens d'injection (15) de l'unité d'injection (14) s'étendant à travers la fente (36) formée entre le siège de soupape (33) et la tête de soupape (37),
- **en ce qu'**un tube de réglage du ralenti ou un canal de réglage de l'air de ralenti (17), qui s'étend en oblique par rapport à l'axe de la soupape d'admission (5) et est dirigé vers la fente (36) de la soupape d'admission (5) ouverte, s'engage ou débouche dans le canal de déplacement de la charge (3) dans la zone entre la soupape d'étranglement (6) et la soupape d'admission (5), et
- **en ce que** l'unité d'injection (14) débouchant dans le canal de déplacement de la charge (3) comporte une buse queue de carpe (63) par laquelle un jet plat de carburant est injecté à travers la fente (36) de la soupape d'admission (5), obturant le canal de déplacement de la charge (3), vers l'intérieur du cylindre dans une zone située en dessous d'une unité d'allumage (31) dans la culasse dans la partie centrale de l'alésage du cylindre, le plan d'injection des jets plats de carburant (41) étant coupé par le jet d'air de combustion (40) affluant dans le canal de réglage de l'air de ralenti (17).

2. Cylindre moteur selon la revendication 1, **caractérisé en ce que** la soupape d'étranglement (6) est un élément plat qui est monté pivotant dans sa partie centrale (34) autour d'un axe de pivotement (8) s'étendant entre les deux canaux (2, 3) et perpendiculaire à la direction de circulation (9) des canaux (2, 3).

3. Cylindre moteur selon la revendication 2, **caractérisé en ce que** la soupape d'étranglement (6) comporte deux parties (10, 11) adjacentes à sa partie centrale (34), lesquelles sont situées chacune dans un canal (2, 3) ou obturent chacune, conjointement avec la partie centrale, un canal (2, 3) ou s'engagent dans celui-ci, la soupape d'étranglement (6) étant apte à pivoter autour de son axe de pivotement (8) depuis une position de fermeture s'étendant transversalement à la direction de circulation (9) vers une position d'ouverture s'étendant parallèlement à la direction de circulation (9).

4. Cylindre moteur selon la revendication 3, **caractérisé en ce que** les deux parties (10, 11) de la soupape d'étranglement (6), situées à proximité de l'axe de pivotement (8) ou adjacentes aux deux côtés de l'axe de pivotement (8), sont disposées dans le même plan et s'engagent chacune dans l'un des deux canaux (2, 3) et effectuent dans les deux canaux (2, 3) des mouvements de pivotement dans le même sens de rotation.

5. Cylindre moteur selon l'une quelconque des revendications 1 à 4, **caractérisé en ce qu'**une surface de paroi intérieure (12) du canal d'aspiration (30) possède dans sa zone - située par référence à la direction de circulation (9) directement en amont de la soupape d'étranglement (6) ou du canal de remplissage (2) - une forme torique (13) qui est ajustée à la zone balayée par la périphérie de la partie (10) de la soupape d'étranglement (6), s'engageant dans le canal de remplissage (2) ou obturant celui-ci, pendant son mouvement de pivotement depuis la position d'ouverture vers la position de fermeture, le tore s'étendant sur la zone angulaire ou zone de pivotement A, balayée par la zone de bordure de la soupape d'étranglement (6) lors de son mouvement de réglage, et A mesure 0 < A ≤ 40°, de préférence 0 < A ≤ 35°, un angle A de 0° correspond à la position de fermeture de la soupape d'étranglement (6).

6. Cylindre moteur selon la revendication 5, **caractérisé en ce que** la zone de la surface de paroi intérieure (12) avec la forme torique (13) et la soupape d'étranglement (6) sont réalisées symétriquement par rapport à un plan perpendiculaire à l'axe de pivotement (8) de la soupape d'étranglement (6) et/ou la soupape d'étranglement (6) et/ou les canaux (2, 3) sont réalisés symétriquement par rapport à un plan contenant l'axe de pivotement (8), et/ou **en ce que** les zones périphériques (11), écartées de l'axe de pivotement (8), des parties (10, 11) de la soupape d'étranglement (6), lesquelles obturent les canaux (2, 3), sont arrondies, en particulier sont arrondies de manière semi-elliptique ou semi-sphérique ou semi-ovale, et/ou **en ce que** la soupape d'étranglement (6) est formée par une plaque ovale, et/ou **en ce que** la soupape d'étranglement (6) est formée par une plaque comportant une partie centrale (34) rectangulaire ou carrée, laquelle se prolonge, sur des côtés opposés, respectivement par une partie (10, 11) de forme semi-sphérique ou semi-elliptique ou semi-ovale, et/ou **en ce que** l'axe de pivotement (8) s'étend le long du plus court axe médian de la soupape d'étranglement (6) et/ou s'étend perpendiculairement aux côtés libres de la partie centrale (34) et/ou est dirigé parallèlement au plan de la cloison (32) et perpendiculairement à l'extension longitudinale de celle-ci dans sa zone à proximité de l'axe de pivotement.

7. Cylindre moteur selon la revendication 5 ou 6, **caractérisé en ce que** la forme torique (13) de la surface de paroi intérieure (12) du canal d'admission ou canal d'aspiration (30) et la surface périphérique de la partie (10), ajustée à la surface de paroi intérieure (12), de la soupape d'étranglement (6) sont guidées étroitement l'une par rapport à l'autre ou à proximité l'une de l'autre au-dessus de la zone de l'angle de pivotement A, et/ou **en ce que** la zone de paroi avec la forme torique (13) de la surface de paroi intérieure (12) forme un bombement (20) de la paroi du canal d'admission ou canal d'aspiration (30), et/ou **en ce que** la forme torique (13) de la surface de paroi intérieure (12) s'étend sur une zone angulaire de 40° maximum, de préférence 35° maximum, à partir du plan défini par la position de fermeture de la soupape d'étranglement (6), le sommet de l'angle étant situé dans l'axe de pivotement (8).

8. Cylindre moteur selon l'une quelconque des revendications 1 à 7, **caractérisé en ce que** dans la zone entre la soupape d'étranglement (6) et la soupape d'admission (5) respective dans le canal de remplissage (2) et dans le canal de déplacement de la charge (3) débouche respectivement au moins un canal de renvoi des effluents (16), et/ou **en ce que** dans la culasse (4) est disposée au moins une unité d'allumage (31) s'engageant dans la chambre de combustion, et/ou **en ce que** dans le canal d'aspiration (30) débouche une unité d'injection de carburant (38) éloignée du cylindre, par laquelle le carburant peut être injecté de manière commandée dans les zone de début, proches de l'étranglement, du canal de remplissage (2) et/ou du canal de déplacement de la charge (3).

9. Cylindre moteur selon l'une quelconque des revendications 1 à 8, **caractérisé en ce que** le tube de réglage du ralenti ou le canal de réglage de l'air de ralenti (17) possèdent un sens d'injection tangentiel à l'alésage du cylindre et orienté avantageusement vers la zone de paroi, proche du siège de cette soupape d'admission (5), de l'alésage du cylindre, en particulier vers le bas en direction de l'alésage du cylindre.

10. Cylindre moteur selon l'une quelconque des revendications 1 à 9, **caractérisé en ce que** la soupape d'étranglement (6) dans sa position de fermeture est en appui, de manière étanche aux gaz, au moins dans des zones partielles de sa périphérie, de préférence sur toute sa périphérie ou sur toute la périphérie (61) des parties (10, 11) contre les surfaces de paroi formées par le canal de déplacement de la charge (3) et le canal de remplissage (2), et/ou **en ce que** la soupape d'étranglement (6) dans la position de fermeture et/ou position de ralenti ou dans la position avec la plus faible charge partielle obture hermétiquement les deux canaux (2, 3), et/ou **en ce que** dans les zones de début, à proximité de l'étranglement, des deux canaux (2, 3) sont réalisés des épaulements d'appui (35), qui s'étendent le long de la périphérie du canal d'admission (30) pour des zones périphériques (61), de préférence pour toute la zone périphérique de la soupape d'étranglement (6).

11. Cylindre moteur selon l'une quelconque des revendications 1 à 10, **caractérisé en ce que** la cloison (32), formée entre les canaux (2, 3) disposés côte à côte, s'étend à partir de la zone des canaux (2, 3), proche du cylindre et située entre les soupapes d'admission (5) adjacentes ou les sièges de soupape (33), jusqu'à l'alésage ou la disposition de l'axe de pivotement (8) de la soupape d'étranglement (6), et/ou **en ce que** la cloison (32), dans sa zone d'extrémité, écartée du cylindre, avec l'axe de pivotement (8) obture hermétiquement ou est hermétiquement en appui contre celui-ci ou **en ce que** l'axe de pivotement (8) est monté dans la zone d'extrémité.

12. Cylindre moteur selon l'une quelconque des revendications 1 à 11, **caractérisé en ce que** l'axe longitudinal de la soupape d'étranglement (6) correspond à l'extension totale (G) maximale, le cas échéant agrandie de 10 % maximum, des ouvertures des soupapes (5) des canaux (2, 3), et l'axe transversal de la soupape d'étranglement (6) correspond au diamètre intérieur, le cas échéant agrandi de 10 % maximum, d'un bord du siège de soupape (33), et/ou **en ce que** la zone d'embouchure (43) du canal de réglage de l'air de ralenti (17) dans le canal de déplacement de la charge (3) entre la soupape d'étranglement (6) et le bord du siège de soupape (33) est réalisée au-dessus du bord du siège de soupape (33) dans une zone de 0 à 35 %, de préférence 0 à 30 % de cette distance (X) et est guidée du côté du cylindre de préférence jusqu'au bord du siège de soupape (33) ou entre en contact avec celui-ci, et/ou **en ce que** l'unité d'injection (14) dans le canal de déplacement de la charge (3) entre la soupape d'étranglement (6) fermée et le bord du siège de soupape (33) est disposée ou débouche au-delà du bord du siège de soupape (33) dans une zone de 5 à 30 %, de préférence 10 à 20 % de cette distance (X).

13. Cylindre moteur selon l'une quelconque des revendications 1 à 12, **caractérisé en ce que** les surfaces de paroi intérieure des canaux (2, 3) et/ou la paroi intérieure du canal d'aspiration (30), située dans la zone de la soupape d'étranglement (6), à l'exception de la forme (13), comportent des génératrices parallèles en soi et/ou parallèles l'une à l'autre.

14. Cylindre moteur selon l'une quelconque des revendications 1 à 13, **caractérisé en ce que** la zone d'embouchure (43) du canal de réglage de l'air de ralenti (17) possède une surface qui est supérieure de 50 à 100 % à la surface des zones d'embouchure des canaux de réglage de l'air de ralenti pour des cylindres de même volume et/ou de même puissance, et/ou **en ce qu'**un régulateur d'air de ralenti est monté en amont du canal de réglage de l'air de ralenti (17) et pour chaque cylindre est prévu ou est réalisé seulement un canal de réglage de l'air de ralenti (17), et/ou **en ce que** le régulateur de l'air de ralenti, en présence d'une soupape d'étranglement (6) ouverte avec un angle de 30 à 90°, règle le passage à travers la zone d'embouchure du canal de réglage de l'air de ralenti (17) à une valeur de passage minimale donnée, différente de zéro.

15. Moteur à combustion interne comportant au moins un cylindre moteur selon l'une des revendications 1 à 14.
